# EUROPEAN PATENT APPLICATION

(11) **EP 4 503 772 A1**
(43) Date of publication of application: **05.02.2025**
(21) Application number: 23781336.5
(22) Date of filing: 29.03.2023
(51) Int. Cl.: H04W 56/00, H04W 84/04, H04B 7/155, H04W 72/20, H04L 5/14, H04L 27/26

(54) **METHOD FOR OPERATING DEVICE AND DEVICE USING SAME IN WIRELESS COMMUNICATION SYSTEM**

(30) Priority: 31.03.2022 KR 20220040174; 01.04.2022 KR 20220040982; 18.04.2022 KR 20220047776; 11.08.2022 KR 20220100771
(71) Applicant: LG Electronics Inc., Yeongdeungpo-gu Seoul 07336 (KR)
(72) Inventor: YOU, Hyangsun, Seoul 06772 (KR); KIM, Kijun, Seoul 06772 (KR); YANG, Suckchel, Seoul 06772 (KR); KO, Hyunsoo, Seoul 06772 (KR)
(74) Representative: Maikowski & Ninnemann Patentanwälte Partnerschaft mbB
(86) International application number: PCT/KR2023/004156
(87) International publication number: WO 2023/191481

(57) **Abstract**

Provided are a method and device for operating an NCR in a wireless communication system. The NCR reports the internal delay value thereof to a base station, and the downlink transmission timing and uplink reception timing of the NCR with respect to an access link between the NCR and a terminal are determined according to the internal delay value. The base station determines the transmission and reception timing of the NCR in consideration of the internal delay value.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/user equipment (UE) is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

Meanwhile, a repeater (also called a relay) can be introduced to NR. In a conventional repeater, the forwarding frequency band/resource over which forwarding is performed is fixed. Then, even if, for example, the UE transmits a signal in only a part of the forwarding frequency band, the repeater receives the signal and performs forwarding in the entire forwarding frequency band. As a result, it does not only forward the signal of the UE in the partial frequency band, but also the noise in the remaining frequency band. As such, repeaters consume unnecessary power and can cause a lot of interference to neighbouring UEs/base stations.

To address these issues, NR is considering introducing a network-controlled repeater (NCR). NCR can receive side control information from the network and control the resources performing forwarding, beam direction on the resources, ON/OFF operation, etc.

Meanwhile, in conventional repeaters, the internal delay required to forward downlink signals received from the base station to the UE or uplink signals received from the UE to the base station is negligible. However, in the case of NCR, the processing time required to forward a signal can be non-negligible, for example, due to the beam adaptation process that applies independent beams to each forwarding resource performing the forwarding. In this case, depending on the processing time (i.e., internal delay) of the NCR, the propagation delay between the base station and the UE during the base station-NCR-UE signalling process may vary. Therefore, the number of guard symbols required when the UE switches from downlink to uplink (or uplink to downlink) may vary.

### DISCLOSURE

### TECHNICAL PROBLEM

The technical problem that the present disclosure aims to solve is to provide a method of operating a device in a wireless communication system and a device that uses the method.

### TECHNICAL SOLUTION

In a wireless communication system, a method of operating of a network-controlled repeater (NCR) comprising a NCR-mobile termination (MT) and a NCR-forwarding (Fwd) and an apparatus are provided. According to the method, the NCR performs, via the NCR-MT, an initial access procedure with a network, reports, via the NCR-MT, an internal delay value of the NCR-Fwd to the network, receives, via the NCR-MT, side control information from the network, and performs, via the NCR-Fwd, a forwarding operation based on the side control information. Here, downlink transmission timing and uplink reception timing for an access link of the NCR-Fwd are determined by considering the internal delay value.

Apparatus for carrying out the above method are provided, such as a processor, a computer readable medium (CRM).

### ADVANTAGEOUS EFFECTS

According to the present disclosure, the network receives a report from the NCR of the internal delay (processing time) of the NCR, so that the internal delay of the NCR is known. Based on the internal delay value, a range of propagation delays of UE signals forwarded through the NCR can be more accurately estimated.

In addition, since the propagation delay of the UE signals forwarded through the NCR can be more accurately estimated, the appropriate guard symbols can be set for the UE accordingly. As a result, conflicts between the downlink/uplink resources of the UE can be avoided.

This can increase the transmission efficiency of a wireless communication system that include the NCR.

### BRIEF DESCRIPTION OF THE DRAWINGS

FIG. 1 illustrates the system structure of a next-generation radio access network (NG-RAN) to which NR is applied.
FIG. 2 is a block diagram showing the radio protocol architecture for the user plane.
FIG. 3 is a block diagram showing the radio protocol structure for the control plane.
FIG. 4 illustrates the functional division between NG-RAN and 5GC.
FIG. 5 illustrates a frame structure that can be applied in NR.
FIG. 6 illustrates the slot structure of an NR frame.
FIG. 7 illustrates the CORESET.
FIG. 8 shows an example of a frame structure for a new wireless access technology.
FIG. 9 illustrates the structure of a self-contained slot.
FIG. 10 illustrates physical channels and typical signal transmission.
FIG. 11 illustrates possible transport network architectures for 5G.
FIG. 12 shows an example of a topology in which the NCR performs transmissions and receptions between the base station and the UE.
FIG. 13 is a diagram comparing the operation of NCR and an existing RF repeater.
FIG. 14 shows an example of a link between a base station, NCR, and UE.
FIG. 15 shows an example of NCR operating in a multi-carrier environment.
FIG. 16 illustrates the transmission timing of RU.
FIG. 17 illustrates an operating method of an NCR under a multi-carrier situation.
FIG. 18 illustrates an operation method of an NCR including MT (=NCR-MT) and RU (=NCR-Fwd) in a wireless communication system.
FIG. 19 illustrates an operation method of a base station in a wireless communication system.
FIG. 20 illustrates a wireless device that can be applied the present specification.
FIG. 21 shows an example of a signal processing module structure.
FIG. 22 shows another example of the structure of a signal processing module in a transmission device.
FIG. 23 shows an example of a wireless communication device according to an implementation example of the present disclosure.
FIG. 24 shows another example of a wireless device.
FIG. 25 shows another example of a wireless device applied to the present specification.
FIG. 26 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure can be applied may be called, for example, E-UTRAN (Evolved-UMTS Terrestrial Radio Access Network), or LTE (Long Term Evolution)/LTE-A system.

The E-UTRAN includes a base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal (MT), a wireless device, terminal etc. The BS is generally a fixed station that communicates with the UE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

As more and more communication devices require greater communication capacity, there is a need for improved mobile broadband communications over traditional radio access technology (RAT). Massive MTC (massive Machine Type Communications), which connects multiple devices and objects to provide various services anytime, anywhere, is also one of the major issues to be considered in next-generation communications. In addition, the design of communication systems considering reliability and latency-sensitive services/UEs is being discussed. As such, the introduction of next-generation radio access technologies that take into account enhanced mobile broadband communication, massive MTC, ultra-reliable and low latency communication (URLLC), etc. is being discussed, and the technology is referred to herein as new radio access technology (new RAT, NR) for convenience.

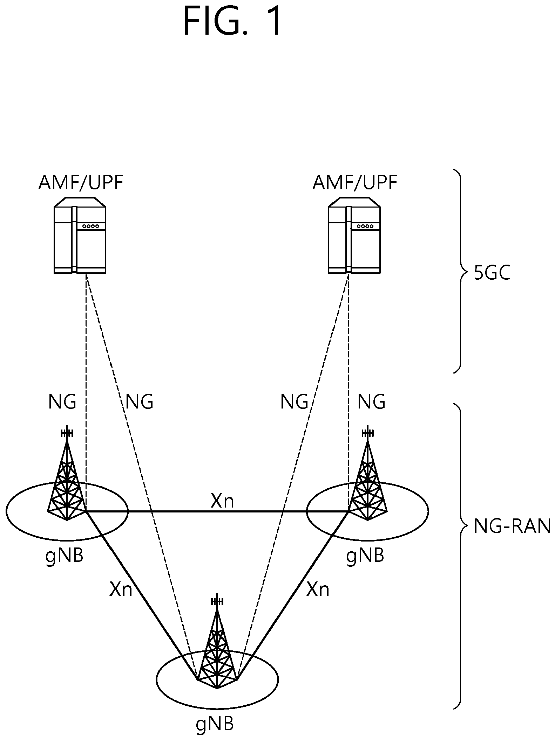

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Meanwhile, layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

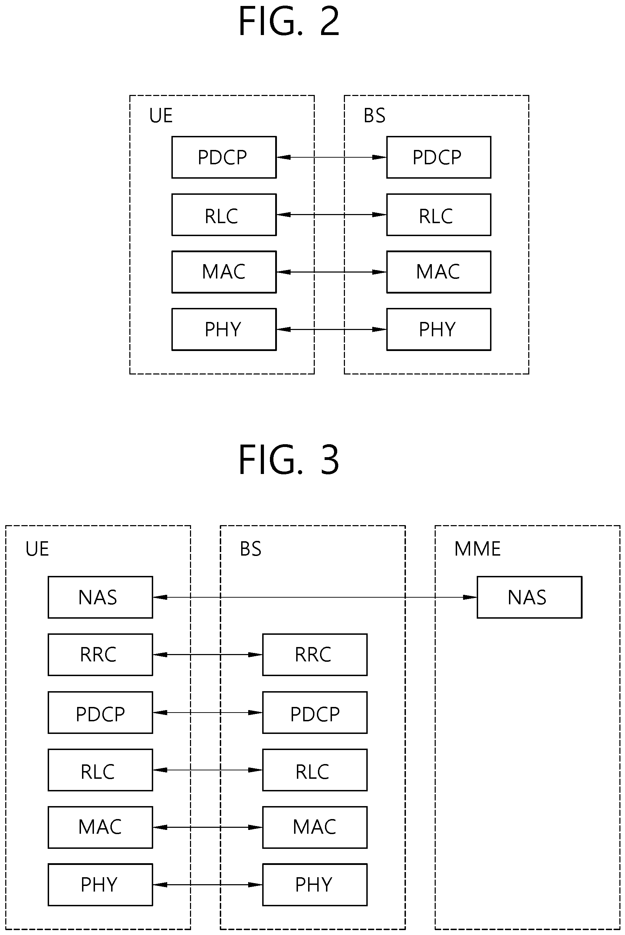

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

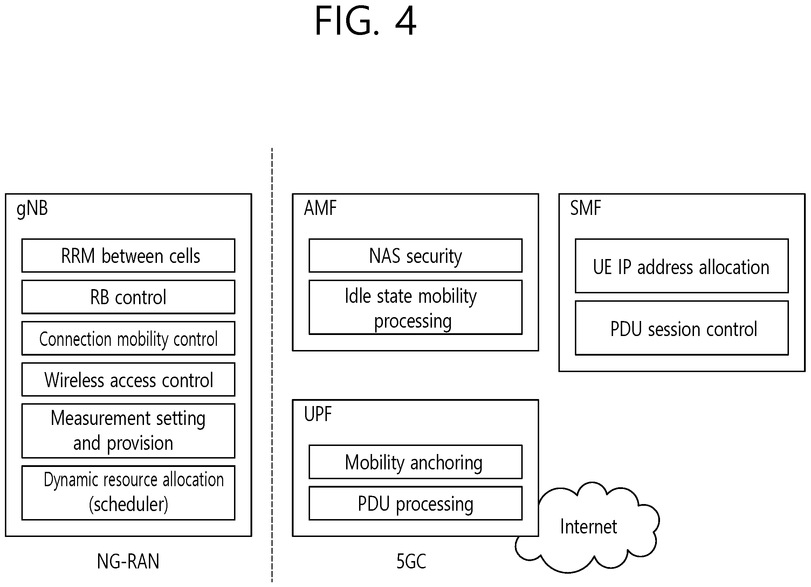

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

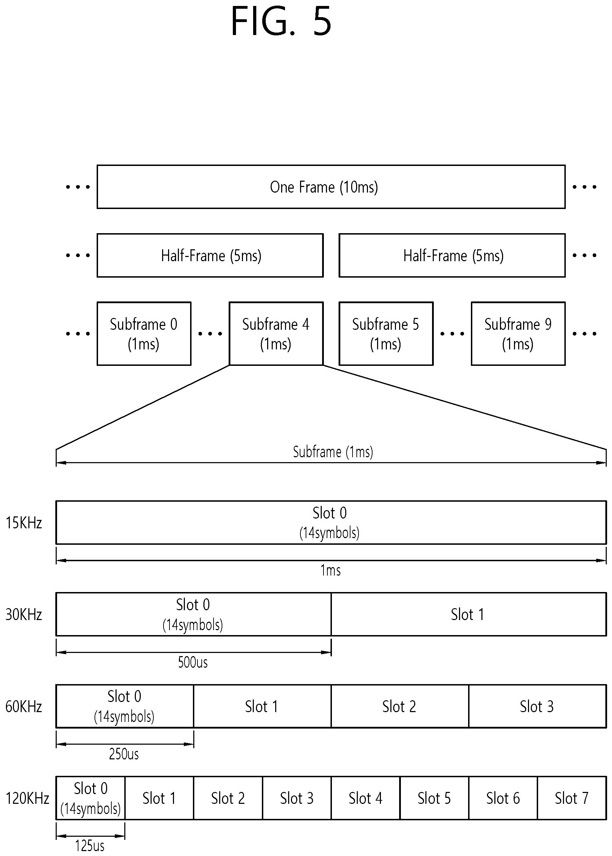

FIG. 5 illustrates an example of a frame structure that may be applied in NR.

Referring to FIG. 5, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µL.

**[Table 1]**

| µ | Δf = 2^{µ}·15[kHz] | Cyclic prefix |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 5 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| SCS (15·2^{µ}) | N^{slot}_{symb} | N^{frame,µ}ₛₗₒₜ | N^{subframe,µ}ₛₗₒₜ |
|---|---|---|---|
| 60kHz (µ =2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

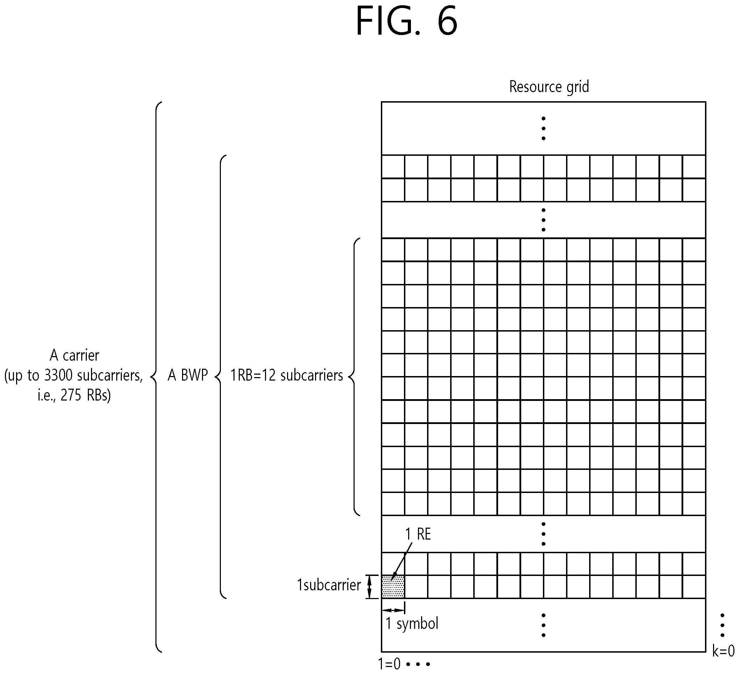

FIG. 6 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of contiguous (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

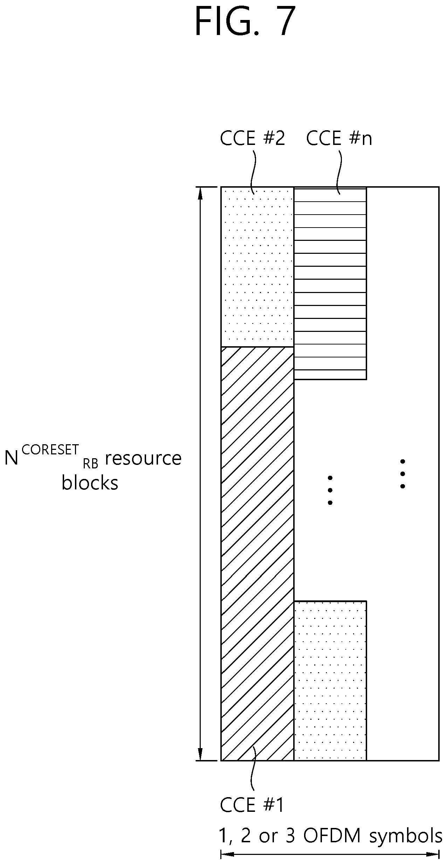

FIG. 7 illustrates CORESET.

Referring to FIG. 7, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 7, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

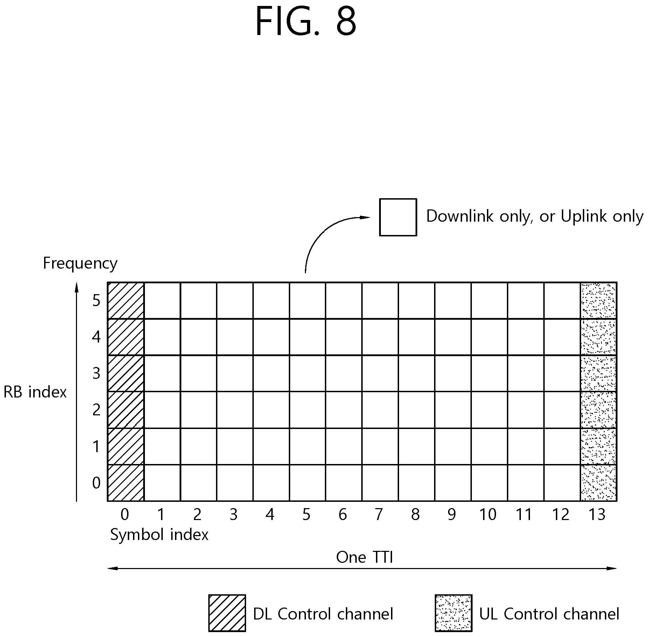

FIG. 8 shows an example of a frame structure for a new wireless access technology.

In NR, as shown in FIG. 8, a structure in which a control channel and a data channel are time-division-multiplexed within one TTI can be considered as a frame structure in order to minimize latency.

In FIG. 8, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure

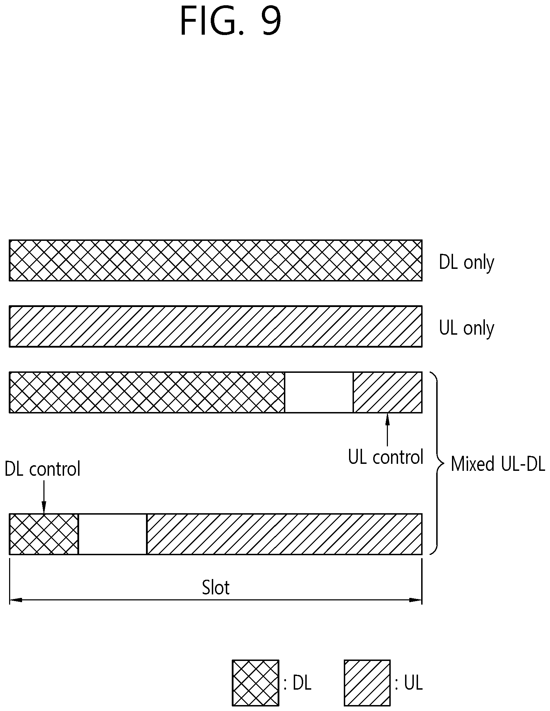

FIG. 9 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.
1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

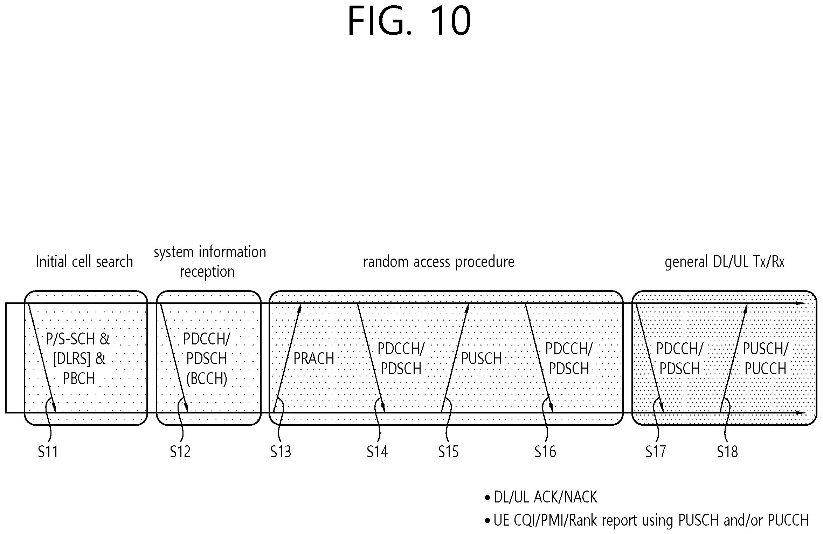

FIG. 10 illustrates physical channels and typical signal transmission.

Referring to FIG. 10, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ∼ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP (bandwidth part) and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

The present disclosure proposes a method for determining an operating frequency resource of a mobile termination (MT) and a remote unit (RU) of a network-controlled repeater (NCR) in the operation of the NCR in an NR environment. Hereinafter, the relay may also be referred to as a repeater. Hereafter, MT may be referred to as NCR-MT, RU may be referred to as NCR-Fwd (forwarding).

### <Transport network architecture for 5G>

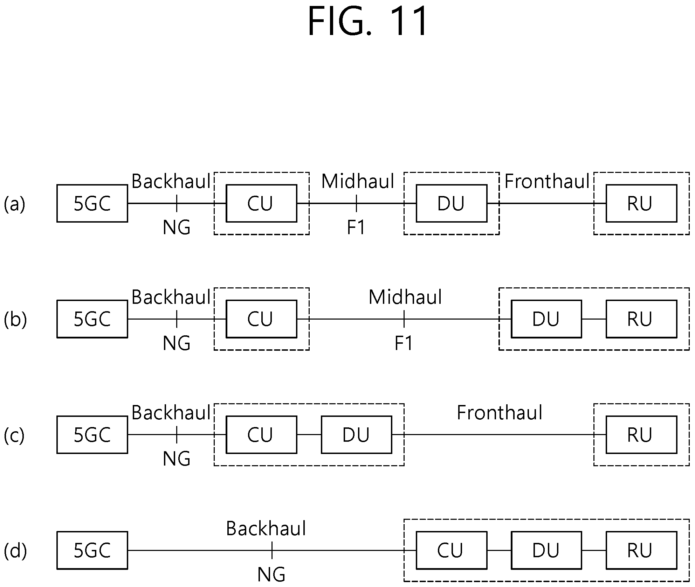

FIG. 11 illustrates transport network architectures for 5G.

The Telecommunication Standardization Sector (ITU-T) has adopted a transport network architecture for 5G that consists of three logical elements: Centralized Unit (CU), Distributed Unit (DU), and Remote Unit (RU), as shown in (a) of FIG. 11.

In this model, mid- and lower-layer functions are divided between DU and RU. RU implement RF functions and, depending on the functional split between RU and DU, also implement low-PHY and high-PHY functions, if possible. Depending on the network requirements, CU, DU, and RU may be grouped into different combinations to form the actual physical network elements.

For example, CU, DU, and RU may be grouped in various combinations, as shown in (b) to (d) of FIG. 11. This can provide flexibility to accommodate different network architectures, applications, and transport network requirements.

As shown in FIG. 11, the transport network between the 5GC and the CU is called backhaul. The backhaul network implements the 3GPP NG interface. Similarly, the transport network between the CU and the DU is called midhaul. The midhaul network implements the 3GPP F1 interface. Finally, the transport network between the DU and the RU is called fronthaul. Backhaul, midhaul, and fronthaul can be collectively referred to as xhaul.

Reconfigurable intelligent surfaces (RIS), also known as intelligent reflecting surfaces (IRS) and large intelligent surfaces (LIS), are programmable structures that can be used to control the propagation of electromagnetic waves (EM) by changing the electrical and magnetic properties of the surface.

In addition to electromagnetic control, RIS can be used to sense the wireless environment by incorporating sensing capabilities. By placing an RIS in an environment where wireless systems operate, it is possible to control at least partially the properties of the wireless channel.

The unique capabilities of RIS can provide a number of benefits, including the potential to improve reliability and coverage performance through beamforming or range extension. The ability to control the propagation environment is somewhat shifting the traditional wireless system design paradigm, where the radio channel is often viewed as an uncontrollable entity that distorts the transmitted signal. Traditionally, transmitters (TX) and receivers (RX) are designed to evenly distribute the effects of the channel. There are many scenarios that can be imagined, from placing a single RIS on a wall to sending signals coming from a predetermined direction.

RIS can be used to improve coverage in shaded areas by providing the 'penetration effect' of base station signals from outside into the building, and the 'reflection effect' of a non-line-of-sight environment.

### <Network-controlled repeater in NR>

### (1) Conventional RF repeater

A (conventional) RF repeater is a non-regenerative type of relay node that simply amplifies and forwards whatever it receives. The main advantages of RF repeaters are their low cost, ease of deployment, and the fact that they do not add latency. Their main disadvantage is that they amplify signals and noise, which can contribute to increased interference (contamination) in the system.

### (2) Rel-17 WI on RF repeater (RAN4)

RF repeaters are specified in Rel-17 of RAN4 for the FR1 band FDD/TDD and FR2 band. The Rel-17 Work Item Description (WID) contains only RF requirements. One of the RAN4 WIDs states that 'it is assumed that the repeater does not perform adaptive beamforming towards the UE'.

### (3) Rel-18 Network controlled repeater for NR

Coverage is a fundamental aspect of cellular network deployment. Mobile operators rely on different types of network nodes to provide comprehensive coverage. Deploying regular full-stack cells is one option, but it may not always be possible (e.g., if there is no backhaul availability) or economically viable.

As a result, new types of network nodes were considered to give mobile operators more flexibility in network deployment. For example, Integrated Access and Backhaul (IAB) is a new type of network node that does not require wired backhaul and was introduced in Rel-16 and improved in Rel-17. Another type of network node is an RF repeater, which simply amplifies and forwards all signals it receives. RF repeaters were widely deployed in 2G, 3G, and 4G to supplement the coverage provided by regular full-stack cells.

RF repeaters provide a cost-effective means of extending network coverage, but they have limitations. RF repeaters simply perform amplification and forwarding tasks without considering the various factors that can improve performance. These factors can include semi-static and/or dynamic downlink/uplink configurations, adaptive transmitter/receiver spatial beamforming, information for ON-OFF states, and more.

A network controlled repeater (NCR) has an improved function for receiving and processing side control information from the network compared to existing RF repeaters. Side control information enables the network controlled repeater to perform amplification and forwarding tasks in a more efficient manner. Potential benefits include mitigation of unnecessary noise amplification, better spatially directed transmission and reception, and simplified network integration.

Research on network controlled repeaters (NCRs) can focus on the following scenarios and assumptions.

Network controlled repeaters are in-band RF repeaters used to extend network coverage in the FR1 and FR2 bands, and FR2 deployment can be prioritized for both outdoor and O2I scenarios.

The network controlled repeater can be transparent to the UE.

The network controlled repeater can simultaneously maintain a base station-to-repeater link and a repeater-to-UE link.

Cost-effectiveness is a key consideration for network controlled repeaters.

The side control information below needs to be studied and identified.

Beamforming information, timing information to align the transmit and receive boundaries of network controlled repeaters, UL-DL TDD configurations information, ON-OFF information for efficient interference management and energy efficiency, and power control information for efficient interference management.

Research and identification of L1/L2 signals (including their configurations) to convey side control information may be required. In terms of the management of network controlled repeaters, it is necessary to study the identification and authentication of network controlled repeaters.

NCR can be considered to be composed of RU and MT.

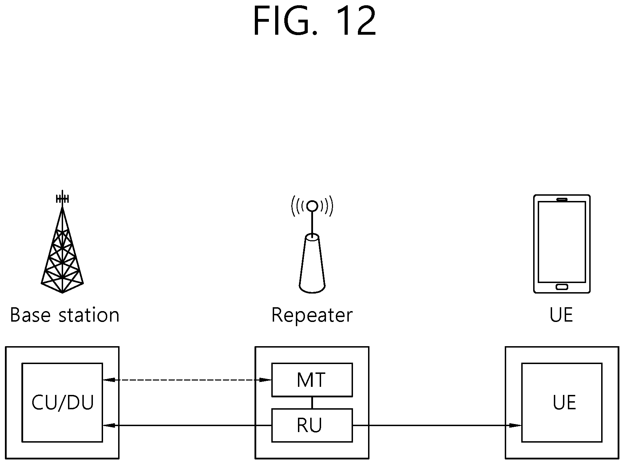

FIG. 12 shows an example of a topology in which NCR performs transmission and reception between a base station and a UE.

Referring to FIG. 12, a CU and/or DU exist in the base station, and the NCR may be connected to the base station. NCR may be composed of MT and RU.

The RU may consist of only the RF layer. The RU can receive signals transmitted by the base station at the RF layer and forward them to the UE, and can receive signals transmitted by the UE at the RF layer and forward them to the base station.

RU only relays signals between the base station and the UE, but does not generate signals/channels itself and transmit them to the base station/UE or receive signals/channels from the base station/UE and detect them.

In order to forward the received signal, the RU may consider adjusting the transmit/receive beam direction, DL/UL direction, ON/OFF status, transmit (Tx) power, etc. at the RF end. However, the operation of the RU cannot be determined by the NCR itself, but can be controlled entirely by the base station.

The MT can include an RF layer and L1, L2, and/or L3 layers. For example, the MT may comprise an RF layer and an L1 layer or an L1/L2 layer alone. Alternatively, the MT may comprise an RF layer and L1/L2/L3 layers.

The MT may detect/receive signals/channels transmitted by the base station, and the MT may generate and transmit signals/channels to the base station. In addition, the MT may receive from the base station information necessary to control the operation of the RU (i.e., side control information). The MT does not perform any transmission or reception with the UE.

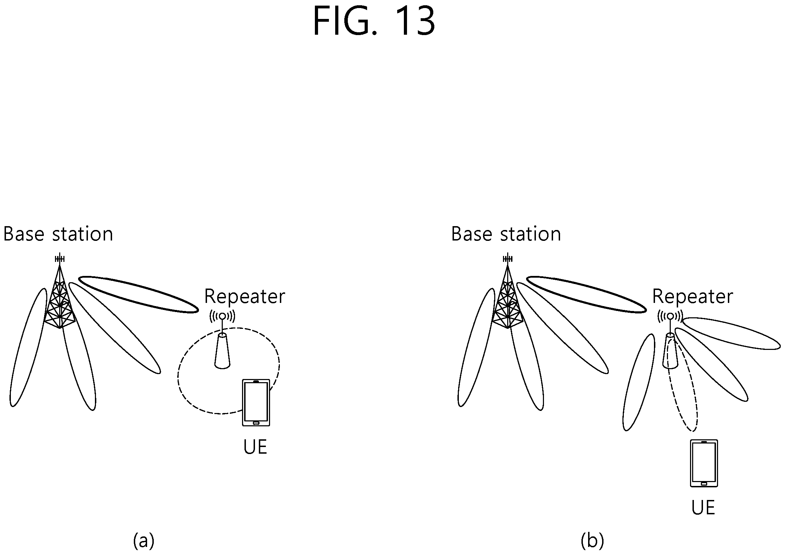

FIG. 13 shows a diagram comparing the operation of NCR and a conventional RF repeater.

Referring to (a) of FIG. 13, in the case of the conventional RF repeater, beamforming was performed applying omni-direction or fixed direction. On the other hand, in NCR, beamforming gain can be obtained by adaptively adjusting the Tx/Rx beam direction of the NCR according to the location of the UE and the channel situation of the UE, as shown in (b) of FIG. 13.

In conventional RF repeaters, it does not distinguish between DL/UL directions in the TDD system and always performs simultaneous transmissions and receptions in both DL and UL directions. Or it only applies fixed TDD configurations to switch between DL and UL directions in a fixed time pattern. On the other hand, in NCR, it is allowed the NCR to perform DL/UL switching by taking into account the TDD configurations. This enables adaptive DL/UL operation and reduces power waste and interference caused by forwarding unnecessary signals.

Conventional RF repeaters always amplify the power of the signal they receive, regardless of whether the base station and UE are transmitting a signal or not. This unnecessarily wastes power and increases interference to the surrounding area. In the case of NCR, it is possible to perform ON/OFF operation to avoid unnecessary signal transmission by turning off the RU when there is no signal to transmit to the base station/UE.

In the case of conventional RF repeaters, the power of the received signal is amplified and transmitted in a fixed ratio. In the case of NCR, the effect of interference on the surrounding area can be reduced by reducing the transmission power of the NCR when transmitting signals with unnecessarily high power, and increasing the transmission power of the NCR when transmitting signals with low power to ensure that the signal is reliably delivered to the receiver.

In the case of conventional RF repeaters, the DL/UL slot boundaries are not known. However, in the case of NCR, the NCR needs to know the transmit and receive boundaries of DLs and ULs in order to adaptively adjust beamforming, ON/OFF, DL/UL direction, Tx power, etc. as described above. This allows the operation of the RU to be adapted differently for each unit of time (e.g., slot/symbol).

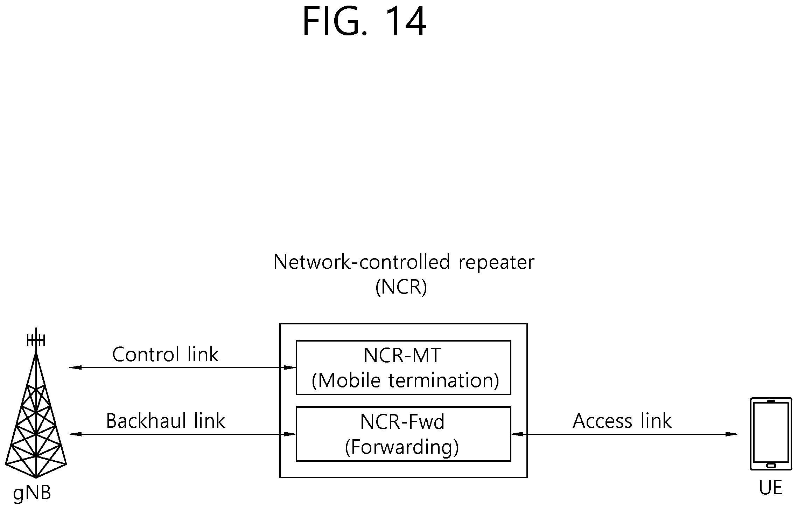

FIG. 14 illustrates a link between a base station, an NCR, and a UE.

Referring to FIG. 14, NCR may include NCR-MT and NCR-Fwd.

NCR-MT can be defined as a functional entity that communicates with a base station (gNB) over a control link (C-link) to enable information exchange (e.g. side control information). The C-link can be based on the NR Uu interface.

Side control information may be at least information for NCR-Fwd control.

The NCR-Fwd can be defined as a functional entity that performs the amplification and forwarding of UL/DL RF signals between the base station and the UE (terminal) over the backhaul link and the access link. The operation of the NCR-Fwd is controlled by the side control information received from the base station.

The contents of this disclosure are described assuming operation in an NCR. However, the contents of this disclosure may also be applied to devices other than NCR. In particular, the contents of the present disclosure can be applied to the operation of RIS. For this purpose, the NCR mentioned in the present disclosure can be replaced with RIS and extended/interpreted. In this case, the RU plays the role of forwarding signals from the base station to the UE and forwarding signals from the UE to the base station in the RIS, and the MT can play the role of receiving side control information from the base station to control the signal transmission of the RU.

Based on the above discussion, the present disclosure describes a method for determining the transmission/reception timing of RU in NCR.

In the present disclosure, the term "network" may be interpreted as being replaced with a base station or a CU/DU. In addition, the term "base station" may be interpreted as being replaced with a network, a CU, or a DU.

In NCR, in order to forward the signal received by the RU, it may be considered to adjust the transmit/receive beam direction, DL/UL direction, ON/OFF, transmission power, etc. at the RF end. However, the operations of the RU cannot be determined by the NCR on its own, but can be controlled entirely by the base station. To this end, the MT may receive from the base station the information necessary to control the operations of the RU (i.e., side control information). This side control information can be conveyed via L1/L2 signalling such as DCI, MAC-CE, etc.

Side control information may include, for example, all or part of the following information.
1) Beamforming information. This can mean information about the Tx/Rx beam direction of the RU. This information may include beam directions for UL Tx to the base station, DL Rx from the base station, DL Tx to the UE, and/or UL Rx from the UE.
2) Timing information to align transmission/reception boundaries of network-controlled repeater. This may mean information for the RU to align Tx/Rx slot or symbol boundaries.
3) Information on UL-DL TDD configuration. This can mean information on the DL/UL direction of the RU.
4) ON-OFF information for efficient interference management and improved energy efficiency. This may mean information about the ON-OFF operation of the RU.
5) Power control information for efficient interference management. This may mean information about the transmissoin power of the RU. Such information may include UL transmission power to the base station and/or DL transmission power to the UE.

On the other hand, cost efficiency may be an important factor in implementing and maintaining NCR. With this in mind, it can be considered that the MT and RU of the NCR share the same antenna and/or RF and operate intra-band.

Alternatively, to operate the operating frequency resources of the MT and RU more flexibly, it may also be considered that the MT and RU use antennas and/or RF independently of each other. In this case, it may be considered that the MT and RU operate over different subband resources within the same band, or over different carrier frequencies. Alternatively, the antennas and RF may be used independently for reasons such as the MT and RU being physically distant from or not affecting each other.

For cost efficiency, NCR may support only single carrier operation, assuming that MT and RU operate on the same carrier.

Alternatively, in environments where support for high data throughput is required, the NCR can support multi-carrier operation. In such cases, it is necessary to discuss the relationship between the carriers on which the MT and RU operate, and how the MT/RU operate in multi-carrier.

The RU needs to determine the DL/UL slot/symbol boundaries of the signals it forwards from the base station to the UE and/or from the UE to the base station. Traditional RF repeaters do not need to know the slot/symbol boundaries of the signals they carry, as they simply forward signals in the DL and/or UL direction for a set time interval. However, in NCR, it is necessary to accurately determine the boundary of the time resource because the RU considers that the Tx/Rx beam direction, DL/UL direction, Tx power, and whether forwarding is performed (i.e., ON/OFF of NCR-Fwd) are applied differently depending on the time resource.

For example, if slot #n performs Tx in the direction of Tx beam #1 and slot #2 performs Tx in the direction of Tx beam #2, the RU needs to know at what point Tx in slot #2 starts so that it can perform switching of the Tx beams.

However, since the RU does not receive or transmit signals from the base station, it cannot perform DL/UL synchronization on its own. Therefore, the slot boundaries of the RU can be considered to be aligned with the slot boundaries of the MT.

This disclosure proposes a method for determining the Tx/Rx timing of RU of an NCR, considering the above situation.

A timing advance group (TAG) consists of one or more serving cells with the same uplink TA and the same downlink timing reference cell. A pTAG refers to a TAG containing a primary cell (PCell). The UE uses the PCell as the timing reference for the pTAG. An sTAG is a TAG that contains only secondary cells (SCells). The UE may use one of the active SCells in this TAG as the timing reference cell, but it should not be changed unless necessary.

### <Method for determining RU Tx/Rx timing for base station-RU link>

When NCR operates on multiple carriers, the carrier resources on which MT operates and the carrier resources on which RU operates may be as follows. Here, the carrier may be also interpreted as a serving cell/component carrier (CC), etc.

Method 1. The RU of the NCR may operate within the carriers for which the MT of the NCR is set.

In this case, if the MT is set to a specific carrier, the RU may always operate on that carrier. Alternatively, the MT may be set to a specific carrier, but the RU may not operate within that specific carrier.

Depending on the embodiment, in a PCell of an MT, only the MT may be operational and the RU may not be operational. For the SCell of the MT, the RU may always be operational.

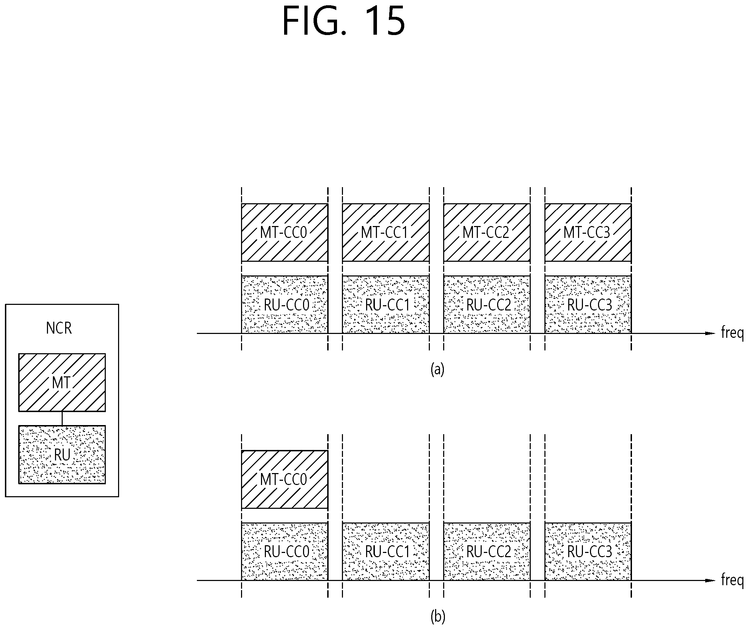

FIG. 15 shows an example of an NCR including MT and RU operating in a multi-carrier environment.

Referring to (a) of FIG. 15, the carrier resource (component carrier) set by the MT and the carrier resource (component carrier) on which the RU operates may be the same. For example, the component carriers set to MT are MT-CC0 to MT-CC3, and the component carriers on which RU operates are RU-CC0 to RU-CC3, which are the same component carriers. The carrier resource set to MT is determined to be the carrier resource on which RU operates.

Method 2. The carriers on which the MT of the NCR is set and the carriers on which the RU of the NCR operates can be independently configured.

In this case, the operation carrier of the RU can be determined regardless of the carrier configured to the MT. In other words, the RU can operate even on carrier resources on which the MT does not operate.

Alternatively, some carrier resources among the carriers on which the RU operates may be set as carriers of the MT. That is, the operation carrier resources of the MT may be a subset of the operation carrier resources of the RU.

Referring to (b) of FIG. 15, some RU operation carrier resources (i.e., RU-CC0) are set as MT operation carriers and MT operates, but other RU operation carrier resources (i.e., RU-CC1, RU-CC2, RU-CC3) are not set as MT carrier resources.

In this case, the RU is operational includes the state that the NCR receives the ON/OFF instruction from the base station and the RU performs the signal forwarding operation in the case of ON, and the RU does not perform the signal forwarding operation in the case of OFF.

This disclosure proposes a method for determining the DL Rx timing and UL Tx timing of an RU for Tx/Rx operation with a base station.

### 1.1. Method of determining the RU DL Rx (downlink reception) timing

For the operation of NCR, the DL Rx timing of the RU can be aligned with the DL Rx timing of the MT. At this time, for the accurate operation of the RU, the DL Rx timing of the RU can be aligned within an error within the time range of (+ or -) alpha relative to the DL Rx timing of the MT.

Alt a. At this time, the value of alpha can be a value set from the base station to the MT. The alpha value can be set, for example, through RRC.

Alt b. Alternatively, the value of alpha can be equal to 'CP length'. Alternatively, the value of alpha may be equal to 'CP length/2'. In this case, the term 'CP length' used to determine the value of alpha may mean the DL subcarrier spacing (SCS) of the MT.

Alternatively, to determine the 'CP length' used to determine the value of alpha, the base station may set the 'CP length' or 'SCS' value used by the MT to determine the value of alpha. The NCR can determine the value of alpha based on the set 'CP length'. Alternatively, the NCR may determine the CP length when applying the SCS based on the set 'SCS' value and determine the value of alpha based on that CP length. This value of alpha may be set, for example, via RRC.

If the MT adjusts its DL Rx timing, the RU's DL Rx timing shall be adjusted accordingly. If the MT's DL Rx timing is adjusted, the RU shall adjust the RU's DL Rx timing so that the RU's DL Rx timing is not more than (+ or -) alpha from the MT's DL Rx timing.

If the NCR is operating in a multi-carrier environment, the DL Rx timing of the MT may vary depending on the operation carrier of the MT. In this case, it is necessary to clearly define what is meant by the DL Rx timing of the MT, which is applied to determine the DL Rx timing of the RU.

When determining the DL Rx timing of an RU based on the DL Rx timing of an MT, it is proposed that the DL Rx timing of an MT applied to determine the DL Rx timing of an RU in a specific serving cell c means the following. Depending on the embodiment, this method can be applied when an MT operation carrier and an RU operation carrier are configured as in the above method 1.

Alt 1. The DL Rx timing of the MT applied to determine the DL Rx timing of the RU in a specific serving cell c means the DL Rx timing of the MT in the serving cell c.

Alt 2. The DL Rx timing of the MT applied to determine the DL Rx timing of the RU in a specific serving cell c means the DL Rx timing of the MT in the downlink timing reference cell of the TAG to which the serving cell c belongs.

Alt 3. The DL Rx timing of the MT applied to determine the DL Rx timing of the RU in a specific serving cell c means the spCell (special cell) of the CG (cell group) to which the serving cell c belongs.

Or, when determining the DL Rx timing of an RU in a specific RU operation carrier based on the DL Rx timing of an MT, the DL Rx timing of the RU in a specific RU operation carrier can be aligned based on the DL Rx timing of an MT as follows. That is, the DL Rx timing of the MT applied to determine the DL Rx timing of the RU on a specific RU carrier c may be as follows. Depending on the embodiment, this method may be applied when the MT operation carrier and the RU operation carrier are configured as in the method 1 or method 2.

It is adjusted based on the DL Rx timing of the serving cell of the MT corresponding to the timing reference carrier of the RU operation carrier c. At this time, the timing reference carrier of the RU operation carrier c may be the same as the <Timing reference for determining the timing of the RU> described below.

### 1.2. Method of determining UL Tx timing of RU

In this disclosure, it is proposed that a method for determining UL Tx timing of RU for operation of NCR.

Method 1. Align the UL Tx timing of RU with the UL Tx timing of MT.

For NCR operation, the UL Tx timing of RU can be aligned with the UL Tx timing of MT.

At this time, for accurate RU operation, the UL Tx timing of the RU can be aligned within an error within the time range of (+ or -) beta relative to the UL Tx timing of the MT.

Alt a. At this time, the value of beta can be a value set from the base station to the MT. This value of beta can be set, for example, through RRC.

Alt b. Or the value of beta can be equal to 'CP length'. Or the value of beta can be equal to 'CP length/2'.

At this time, the 'CP length' used to determine the value of beta may mean the DL SCS (subcarrier spacing) of MT.

Alternatively, the base station can set the 'CP length' or 'SCS' value used to determine the beta value to the MT to determine the 'CP length' used to determine the beta value. NCR can determine the beta value based on the set 'CP length'. Or, NCR can determine the CP length when applying the SCS based on the set 'SCS' value, and determine the beta value based on the CP length. This beta value can be set, for example, through RRC.

In this case, if the MT adjusts the UL Tx timing, the RU's UL Tx timing should also be adjusted accordingly. At this time, if the MT's UL Tx timing is adjusted, the RU should adjust the RU's UL Tx timing so that the RU's UL Tx timing does not exceed an error of (+ or -) alpha from the MT's UL Tx timing.

When NCR operates in a multi-carrier environment, the UL Tx timing of MT may vary depending on the operation carrier of MT. In this case, it is necessary to clearly define what the UL Tx timing of the MT applied to determine the UL Tx timing of the RU means. When determining the UL Tx timing of an RU based on the UL Tx timing of an MT, it is proposed that the UL Tx timing of an MT applied to determine the UL Tx timing of an RU in a specific serving cell c means the following. Depending on an embodiment, this method can be applied when an MT operation carrier and an RU operation carrier are configured as in the above method 1.

Alt 1. The UL Tx timing of the MT applied to determine the UL Tx timing of the RU in a specific serving cell c means the UL Tx timing of the MT in the serving cell c.

Alt 2. The UL Tx timing of the MT applied to determine the UL Tx timing of the RU in a specific serving cell c means the UL Tx timing of the MT applied in the TAG to which the serving cell c belongs.

Alt 3. It refers to the spCell (special cell) of the CG (cell group) to which the serving cell c belongs.

When determining the UL Tx timing of an RU on a specific RU operation carrier based on the UL Tx timing of an MT, the UL Tx timing of an RU on a specific RU operation carrier can be aligned based on the UL Tx timing of an MT as follows. That is, the UL Tx timing of the MT applied to determine the UL Tx timing of the RU on a specific RU carrier c can be as follows. Depending on the embodiment, this method can be applied when the MT operation carrier and the RU operation carrier are configured as in the method 1 or method 2.

It is adjusted based on the UL Tx timing of the serving cell of the MT corresponding to the RU operation carrier c's timing reference carrier. At this time, the timing reference carrier of the RU operation carrier c may be the same as the <Timing reference for determining the timing of the RU> described below.

### Method 2. Determine the UL Tx timing of RU based on the TA value of MT.

For NCR operation, the UL Tx timing of the RU can be applied ahead of the DL Rx timing by the TA value applied by the MT.

For MT, UL Tx timing can be applied as follows.

The uplink frame number i for transmission from MT should start T_{TA} = (N_{TA} + N_{TA, offset})T_{c} before the start of the corresponding downlink frame from the MT. However, T_{TA}=0 is applied to transmission of msgA (message A) on PUSCH.

At this time, the TA applied by the MT may mean the T_{TA} value applied by the MT to determine the UL Tx timing.

Considering the case where NCR operates in a multi-carrier environment, the T_{TA} value of MT applied to determine the UL Tx timing of RU in a specific serving cell c may mean the T_{TA} value applied by MT in the TAG to which the serving cell c belongs.

When the UL Tx timing of the RU is determined as a timing that is advanced by the TA value applied by the MT compared to the DL Rx timing, the DL Rx timing can be specifically as follows. Depending on the embodiment, this method can be applied when an MT operation carrier and an RU operation carrier are configured as in the above method 1.

Alt 1. DL Rx timing may refer to the DL Rx timing of the RU. That is, the RU determines its UL Tx timing as the timing that is advanced by the TA value applied by the MT compared to its own DL Rx timing.

At this time, considering the case where NCR operates in a multi-carrier environment, the DL Rx timing of the RU applied to determine the UL Tx timing of the RU in a specific serving cell c may mean the following.

Alt 1-1. It means the DL Rx timing of RU in serving cell c.

Alt 1-2. It means the DL Rx timing of the RU in the downlink timing reference cell of the TAG to which serving cell c belongs.

Alt 1-3. It means the DL Rx timing of the RU in the spCell (special cell) of the CG (cell group) to which the serving cell c belongs.

Alt 2. DL Rx timing may refer to the DL Rx timing of the MT. That is, the RU determines its UL Tx timing as the timing that is advanced by the TA value applied by the MT compared to the DL Rx timing of the MT.

At this time, considering the case where NCR operates in a multi-carrier environment, the DL Rx timing of the MT applied to determine the UL Tx timing of the RU in a specific serving cell c may mean the following.

Alt 2-1. It means the DL Rx timing of MT in serving cell c.

Alt 2-2. It means the DL Rx timing of MT in the downlink timing reference cell of the TAG to which serving cell c belongs.

Alt 2-3. It means the DL Rx timing of MT in spCell (special cell) of CG (cell group) to which serving cell c belongs.

When determining by the timing advanced by the TA value applied by the MT compared to the DL Rx timing on a specific RU operation carrier, the RU UL Tx timing on a specific RU operation carrier can be aligned based on the following DL Rx timing. That is, the DL Rx timing applied to determine the UL Tx timing of an RU on a specific RU carrier c can be as follows. Depending on the embodiment, this method can be applied when the MT operation carrier and the RU operation carrier are configured as in the method 1 or method 2.

Alt 1. DL Rx timing may refer to the DL Rx timing of the RU. That is, the RU determines its UL Tx timing as the timing that is advanced by the TA value applied by the MT compared to its own DL Rx timing.

At this time, considering the case where NCR operates in a multi-carrier environment, the DL Rx timing of the RU applied to determine the UL Tx timing of the RU in a specific RU carrier c may mean the following.

Alt 1-1. It refers to the DL Rx timing of the RU on the RU carrier c.

Alt 2. DL Rx timing may refer to the DL Rx timing of the MT. That is, the RU determines its UL Tx timing as the timing that is advanced by the TA value applied by the MT compared to the DL Rx timing of the MT.

At this time, considering the case where NCR operates in a multi-carrier environment, the DL Rx timing of the MT applied to determine the UL Tx timing of the RU in a specific RU carrier c may mean the following.

It refers to the DL Rx timing of the serving cell of the MT corresponding to the timing reference carrier of the RU operation carrier c. At this time, the timing reference carrier of the RU operation carrier c may be the same as the <Timing reference for determining the timing of the RU> described below.

### <Method for determining RU Tx/Rx timing for RU-UE link>

In this disclosure, it is proposed a method for determining DL Tx timing and UL Rx timing of an RU for Tx/Rx operations with a UE.

Since the RU performs the role of forwarding a signal received from the base station to the UE and forwarding a signal received from the UE to the base station, the DL Tx timing and UL Rx timing of the RU may be identical to the DL Rx timing and UL Tx timing of the RU, respectively.

However, in NCR, the RU can perform transmission by changing the beam direction, Tx power, etc. of the received signal rather than simply amplifying the power of the signal to be received and forwarding it. This may require processing time. If this processing time is less than a certain value (e.g., CP length), the DL Tx timing and UL Rx timing of the RU can be maintained identical to the DL Rx timing and UL Tx timing of the RU, respectively. Otherwise, it may be difficult to keep the DL Rx timing and UL Tx timing of the RU identical.

Due to this, it may be considered that the DL transmission (Tx) timing of the RU (=NCR-Fwd) is performed by delaying a certain amount of time compared to the DL reception (Rx) timing of the RU (or the DL reception timing of the MT (=NCR-MT)). Additionally, it may be considered that the UL reception timing of the RU is performed ahead (advance) by a certain time value compared to the UL transmission timing of the RU (or the UL transmission timing of the MT). The above-mentioned 'certain time value' may be, for example, a value corresponding to an internal delay of the RU. The internal delay value may be a processing time required by the RU.

The internal delay value may vary depending on the manufacturer, class, and purpose of the NCR, and may not be known to the network in advance. For example, when NCRs of various classes/purposes from multiple manufacturers are deployed, the network may not be able to know the internal delay values of each NCR in advance. Therefore, NCR (specifically NCR-MT) can report the internal delay value of RU to the network (base station). The network (base station) can define/assume/determine the downlink transmission timing and uplink reception timing for the access link (i.e., the link between the RU and the UE) by considering the above internal delay value.

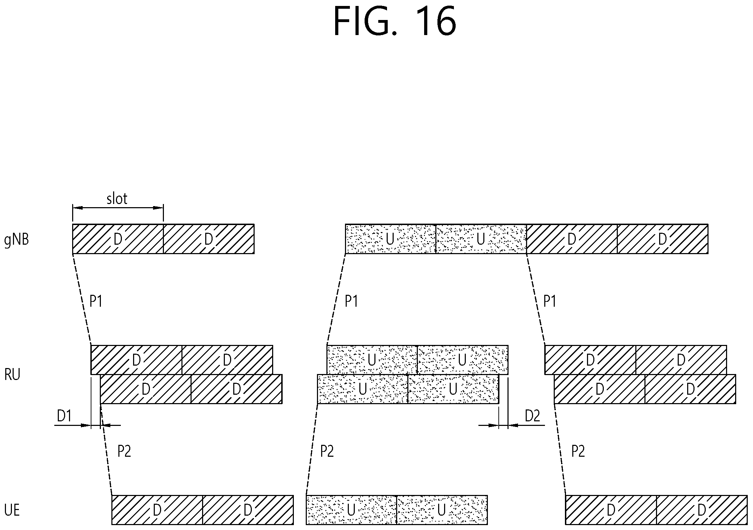

FIG. 16 illustrates the transmission timing of RU.

Referring to FIG. 16, the RU delays the DL signal received from the base station by D1 and transmits it to the UE. In addition, the RU delays the UL signal received from the UE by D2 and transmits it to the base station. In FIG. 16, P1 and P2 represent propogation delays.

### 2.1. Method of determining RU's DL Tx timing

When the RU receives a DL signal by applying the DL Rx timing determined as in Section 1.1, the RU can transmit the DL signal in accordance with the DL Tx timing of the RU. That is, when the gap between the DL Tx timing of the RU and the DL Rx timing of the RU is G1, the RU can transmit the received DL signal by delaying it by G1 by applying the DL Rx timing determined as in Section 1.1.

For this operation, the method of determining the DL Tx timing of the RU is described below.

Method 1. Align the RU's DL Tx timing based on the RU's DL Rx timing.

For the operation of NCR, the RU's DL Tx timing can be determined as the timing delayed by D1 compared to the RU's DL Rx timing.

When NCR operates in a multi-carrier environment, the DL Rx timing of the RU may be different depending on the operation carrier of the RU. If the RU's DL Tx timing is determined as a timing delayed by D1 compared to the RU's DL Rx timing, it is necessary to clearly define what the RU's DL Rx timing means. For this purpose, the DL Rx timing of the RU applied to determine the DL Tx timing of the RU in a specific serving cell c may mean the following. Depending on the embodiment, this method can be applied when an MT operation carrier and an RU operation carrier are configured as in the above method 1.

Alt 1. The DL Rx timing of the RU applied to determine the DL Tx timing of the RU in a specific serving cell c means the DL Rx timing of the RU in serving cell c.

Alt 2. The DL Rx timing of the RU applied to determine the DL Tx timing of the RU in a specific serving cell c means the DL Rx timing of the RU in the downlink timing reference cell of the TAG to which the serving cell c belongs.

Alternatively, if the RU's DL Tx timing is determined as a timing delayed by D1 compared to the RU's DL Rx timing, the RU's DL Rx timing may mean the following. Depending on the embodiment, this method can be applied when the MT operation carrier and the RU operation carrier are configured as in the method 1 or method 2.

Alt 1-1. It refers to the DL Rx timing of the RU on the RU carrier c.

Method 2. Align the RU's DL Tx timing based on the MT's DL Rx timing.

For the operation of NCR, the RU's DL Tx timing can be determined as the timing delayed by D1 compared to the MT's DL Rx timing.

When NCR operates in a multi-carrier environment, the DL Rx timing of MT may differ depending on the operation carrier of MT. If the RU's DL Tx timing is determined as being delayed by D1 compared to the MT's DL Rx timing, it is necessary to clearly define what the MT's DL Rx timing means. For this purpose, the DL Rx timing of the MT applied to determine the DL Tx timing of the RU in a specific serving cell c may mean the following. Depending on the embodiment, this method can be applied when an MT operation carrier and an RU operation carrier are configured as in the above method 1.

Alt 1. The DL Rx timing of MT applied to determine the DL Tx timing of RU in a specific serving cell c means the DL Rx timing of MT in serving cell c.

Alt 2. The DL Rx timing of the MT applied to determine the DL Tx timing of the RU in a specific serving cell c means the DL Rx timing of the MT in the downlink timing reference cell of the TAG to which the serving cell c belongs.

Alt 3. The DL Rx timing of MT applied to determine the DL Tx timing of RU in a specific serving cell c means the DL Rx timing of MT in spCell (special cell) of CG (cell group) to which serving cell c belongs.

Or, if the DL Tx timing of the RU in a specific RU operation carrier is determined as the timing delayed by D1 compared to the DL Rx timing of the MT, the DL Rx timing of the MT applied to determine the DL Tx timing of the RU on a specific RU carrier c can be as follows. Depending on the embodiment, this method can be applied when the MT operation carrier and the RU operation carrier are configured as in the method 1 or method 2.

It may mean DL Rx timing of the serving cell of the MT corresponding to the timing reference carrier of the RU operation carrier c. At this time, the timing reference carrier of the RU operation carrier c may be the same as the <Timing reference for determining the timing of the RU> described below.

### 2.2. Method of determining UL Rx timing of RU

When the RU receives a UL signal in accordance with the UL Rx timing of the RU, the RU can transmit the signal in accordance with the UL Tx timing determined as in Section 1.2 above. In other words, if the gap between the UL Tx timing of the RU and the UL Rx timing of the RU is G2, the RU can perform UL Rx at a time that is G2 ahead of the UL Tx timing determined as in Section 1.2 above.

For this operation, it is proposed a method to determine the UL Rx timing of RU below.

Method 1. Align the UL Rx timing of the RU based on the UL Tx timing of the RU.

For the operation of NCR, the UL Rx timing of the RU can be determined as the timing that is advanced by D2 compared to the UL Tx timing of the RU.

When NCR operates in a multi-carrier environment, the UL Tx timing of the RU may be different depending on the operation carrier of the RU. If the UL Rx timing of the RU is determined as a timing that is advanced by D2 compared to the UL Tx timing of the RU, it is necessary to clearly define what the UL Tx timing of the RU means. For this purpose, the UL Tx timing of an RU applied to determine the UL Rx timing of an RU in a specific serving cell c may mean the following. Depending on the embodiment, this method can be applied when an MT operation carrier and an RU operation carrier are configured as in the above method 1.

Alt 1. The UL Tx timing of the RU applied to determine the UL Rx timing of the RU in a specific serving cell c means the UL Tx timing of the RU in serving cell c.

Alt 2. The UL Tx timing of the RU applied to determine the UL Rx timing of the RU in a specific serving cell c means the UL Tx timing of the RU applied by the RU in the TAG to which the serving cell c belongs.

Alt 3. The UL Tx timing of the RU applied to determine the UL Rx timing of the RU in a specific serving cell c means the UL Tx timing of the RU in the spCell (special cell) of the CG (cell group) to which the serving cell c belongs.

Alternatively, if the UL Rx timing of the RU is determined as a timing that is advanced by D2 compared to the UL Tx timing of the RU, the UL Tx timing of the RU may mean the following. Depending on the embodiment, this method can be applied when the MT operation carrier and the RU operation carrier are configured as in the method 1 or method 2.

Alt 1. It means the UL Tx timing of RU in RU carrier c.

Method 2. Align the UL Rx timing of RU based on the UL Tx timing of MT.

For the operation of NCR, the UL Rx timing of RU can be determined as the timing that is advanced by D2 compared to the UL Tx timing of MT.

When NCR operates in a multi-carrier environment, the UL Tx timing of MT may vary depending on the operation carrier of MT. If the UL Rx timing of the RU is determined as being advanced by D2 compared to the UL Tx timing of the MT, it is necessary to clearly define what the UL Tx timing of the MT means. For this purpose, the UL Tx timing of the MT applied to determine the UL Rx timing of the RU in a specific serving cell c may mean the following. Depending on the embodiment, this method can be applied when an MT operation carrier and an RU operation carrier are configured as in the above method 1.

Alt 1. The UL Tx timing of the MT applied to determine the UL Rx timing of the RU in a specific serving cell c means the UL Tx timing of the MT in the serving cell c.

Alt 2. The UL Tx timing of the MT applied to determine the UL Rx timing of the RU in a specific serving cell c means the UL Tx timing applied by the MT in the TAG to which the serving cell c belongs.

Alt 3. The UL Tx timing of the MT applied to determine the UL Rx timing of the RU in a specific serving cell c means the UL Tx timing of the MT in the spCell (special cell) of the CG (cell group) to which the serving cell c belongs.

Or, if the UL Rx timing of the RU on a specific RU operation carrier is determined as a timing advanced by D2 compared to the UL Tx timing of the MT, the UL Tx timing applied to determine the UL Rx timing of the RU on a specific RU carrier c may be as follows. Depending on the embodiment, this method can be applied when the MT operation carrier and the RU operation carrier are configured as in the method 1 or method 2.

It means UL Tx timing of the serving cell of MT corresponding to the timing reference carrier of RU operation carrier c. At this time, the timing reference carrier of the RU operation carrier c may be the same as the <Timing reference for determining the timing of the RU> described below.

### 2.3. Processing time D for RU

For operations such as those described in Sections 2.1 and 2.2 above, the RU should determine which values of D1 and/or D2 to apply. Below, a method for determining the D1 value required to determine the DL Tx timing of the RU and the D2 value required to determine the UL Rx timing of the RU is described.

In the present disclosure, the value of D1 and the value of D2 may be different. The following description assumes that the values of D1 and D2 are different. However, this is not a limitation, i.e., the values of D1 and D2 may be equal to each other and may be replaced by one common value, e.g., δ_{D}. δ_{D} can refer to the internal delay value of the RU or the processing time.

Assuming that the processing time required for the RU to forward the received signal is negligible, the values of D1 and D2 can always be equal to 0. In this case, RU can determine that the values of D1 and D2 are always equal to 0.

Alternatively, the RU may require a large amount of processing time, and this processing time may need to be taken into account for the RU's DL Tx timing and UL Rx timing.

### <Reporting of required D1, D2 values>

In order for the base station to determine the values of D1 and D2 required for the RU, the base station needs to know information about the processing time required for the RU. For this purpose, the MT can report to the base station information about the processing time required for the RU. The above processing time may mean the required D1 and/or required D2 values required by the RU. Alternatively, as described above, the required D1 and required D2 values may be the same value (e.g., δ_{D}). This information may be transmitted, for example, via RRC or MAC-CE.

More specifically, information about this required processing time can be reported in the following form.

Alt 1. It can be reported in the form of time information. For example, it can be reported in the form of time, such as microsecond (µsec), millisecond (msec), etc.

Alt 2. It can be reported in the form of a ratio of the OFDM symbol length. For example, a ratio of 0.5 could mean that the processing time is 0.5 times the OFDM symbol length. OFDM symbol length may vary depending on the applied subcarrier spacing (SCS). Therefore, the applied SCS value may be reported together to determine the OFDM symbol length.

Alt 3. It can be reported in the form of a ratio of slot length. For example, a ratio of 0.2 could mean that the processing time is 0.2 times the slot length.

### <Setting the applicable D1, D2 values>

The base station can set the values of D1 and D2 applied to the RU to the MT by referring to the reported processing time values or independently. This information can be transmitted, for example, via RRC or MAC-CE.

More specifically, information about the required processing time can be set in the following format.

Alt 1. It can be set in the form of time information such as microsecond (µsec) or millisecond (msec).

Alt 2. It can be set in the form of a ratio to the OFDM symbol length. For example, a ratio of 0.5 may mean that a processing time equivalent to 0.5 times the OFDM symbol length is required.

At this time, the OFDM symbol length may vary depending on the applied SCS (subcarrier spacing). Therefore, the applied SCS value may be set together to determine the OFDM symbol length.

Alt 3. It can be set in the form of a ratio to the slot length. For example, a ratio of 0.2 may mean that processing time equivalent to 0.2 times the slot length is required.

If this setting is not present, the MT may interpret the 'required D1' and 'required D2' values reported to the base station as the D1 and D2 values applicable to itself.

### <Timing reference for determining the timing of the RU>

In order to determine the timing of the RU in the NCR (e.g., DL-Rx timing for the base station-RU link, UL-Tx timing for the base station-RU link, DL-Tx timing for the RU-UE link, and/or UL-Rx timing for the RU-UE link), the timing of the MT on which the timing is based may be referenced.

Specifically, the timing of an RU in a specific RU operation carrier can be determined based on the timing in the carrier of the MT that serves as the timing reference.

For this purpose, the carrier of a specific MT can become the timing reference of the carrier of a specific RU. In this case, the timing reference carrier of the RU operation carrier c can be as follows.

Alt 1. The timing reference carrier of the RU operation carrier c can be set from the base station. In this case, additionally, one of the carriers of the spCell of the MT can be set as the timing reference carrier.

Alt 2. The carrier of the MT receiving the side control information applied to the corresponding RU carrier is determined as the timing reference.

Alt 3. The carrier of the MT existing in the same frequency band as the corresponding RU carrier is determined as the timing reference.

To support in-band operation between NCR-MT and NCR-Fwd while supporting NCR to operate as a multi-carrier, there may be at least one NCR-MT carrier within each frequency band in which NCR-Fwd operates.

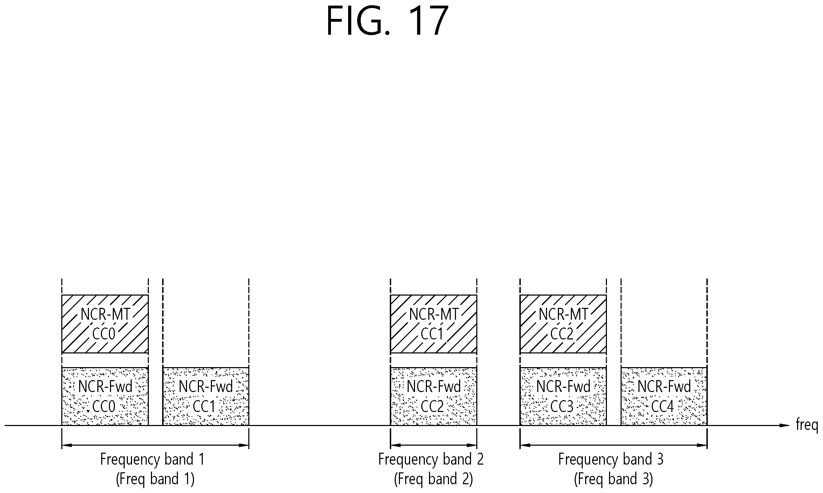

FIG. 17 illustrates a method of operating of the NCR under a multi-carrier situation.

Referring to FIG. 17, when the NCR-Fwd performs forwarding operations over a plurality of frequency bands (i.e., frequency band 1, frequency band 2, and frequency band 3), there may be (or may be assumed/expected to be) at least one carrier on which NCR-MT operates within each frequency band.

Within each frequency band where NCR-Fwd operates, there may be (is configured to be) at least one serving cell c of NCR-MT. That is, it is set so that there is at least one component carrier on which NCR-MT operates within each frequency band on which NCR-Fwd operates.

In this case, the operation of NCR-Fwd within each frequency band may operate in relation with the NCR-MT carrier existing in the same frequency band. In other words, when there are multiple NCR-Fwd carriers in a specific frequency band, the TCI state, Tx/Rx timing, TDD settings, etc. applied to the NCR-MT in the same frequency band can be referenced for the operation of NCR-Fwd on those carriers. That is, the operation of NCR-Fwd can be determined based on the settings in the NCR-MT carrier existing in the same frequency band.

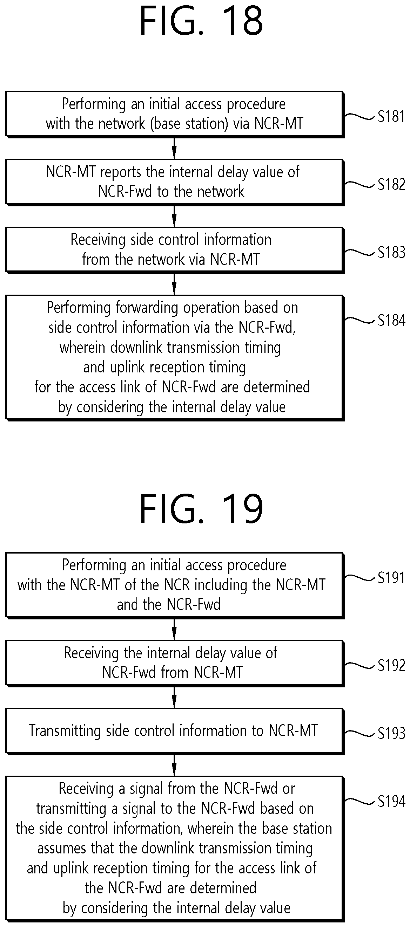

FIG. 18 illustrates an operation method of an NCR including MT (=NCR-MT) and RU (=NCR-Fwd) in a wireless communication system.

Referring to FIG. 18, NCR performs an initial access procedure with the network via NCR-MT (S181). The initial access procedure can be referred to FIG. 10 and its description.

The NCR-MT of NCR reports the internal delay value of NCR-Fwd to the network (S182). The internal delay value of NCR-Fwd may mean the processing time of the NCR-Fwd mentioned above. The internal delay value of NCR-Fwd may mean the δ_{D} mentioned above.

NCR receives side control information from the network via NCR-MT (S183).

Side control information may include a list of forwarding resources that may be used for forwarding operations of NCR-Fwd. A beam index to be applied to each forwarding resource may be provided.

NCR performs forwarding operation based on side control information through the NCR-Fwd (S184). At this time, the downlink transmission timing and uplink reception timing for the access link of NCR-Fwd are determined by considering the internal delay value.

The transmission and reception timing of NCR-Fwd and NCR-MT can be determined as follows.

For example, the downlink reception timing of NCR-Fwd may be aligned with the downlink reception timing of NCR-MT, and the uplink transmission timing of NCR-Fwd may be aligned with the uplink transmission timing of NCR-MT.

In this case, the downlink transmission timing of the NCR-Fwd is delayed by the internal delay value from the downlink reception timing of the NCR-MT (or the downlink reception timing of the NCR-Fwd), and the uplink reception timing of the NCR-Fwd is earlier than the uplink transmission timing of the NCR-MT (or the uplink transmission timing of the NCR-Fwd) by the internal delay value.

The downlink transmission timing of the NCR-Fwd means the timing at which the NCR-Fwd transmits the signal received from the network to the UE. The uplink reception timing of the NCR-Fwd means the timing at which the NCR-Fwd receives the signal from the UE.

The downlink reception timing of the NCR-MT refers to the timing at which the NCR-MT receives a signal from the network, and the uplink transmission timing of the NCR-MT refers to the timing at which the NCR-MT transmits a signal to the network.

The downlink reception timing of the NCR-Fwd means the timing at which the NCR-Fwd receives a signal from the network, and the uplink transmission timing of the NCR-Fwd means the timing at which the NCR-Fwd transmits the signal received from the UE to the network.

According to the above method, the network can know the internal delay of the NCR since it receives the internal delay (processing time) of the NCR from the NCR. Based on the internal delay value, the network can more accurately predict the range of propagation delay of UE signals forwarded through the NCR. In addition, the range of propagation delay of base station signals forwarded through the NCR can be predicted more accurately.

Since the propagation delay of UE signals forwarded through NCR can be predicted more accurately, appropriate guard symbols can be set to UEs accordingly. As a result, collision between downlink/uplink resources of the UE can be prevented, thereby increasing the transmission efficiency of a wireless communication system including NCR.

FIG. 19 illustrates an operation method of a base station in a wireless communication system.

Referring to FIG. 19, the base station performs an initial access procedure with the NCR-MT of the NCR including the MT (=NCR-MT) and the RU (=NCR-Fwd) (S191). The initial access procedure can be referred to FIG. 10 and the corresponding description.

The base station receives the internal delay value of NCR-Fwd from NCR-MT (S192). The internal delay value of NCR-Fwd may mean the processing time of NCR-Fwd and may mean the aforementioned δ_{D}.

The base station transmits side control information to NCR-MT (S193).

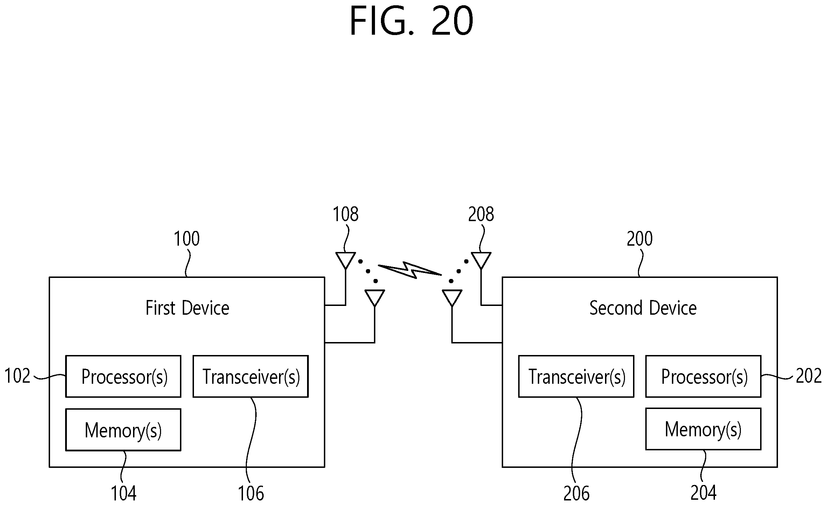

The base station receives a signal from the NCR-Fwd or transmits a signal to the NCR-Fwd based on the side control information (S194). At this time, the base station assumes that the downlink transmission timing and uplink reception timing for the access link of the NCR-Fwd are determined by considering the internal delay value. FIG. 20 illustrates a wireless device applicable to the present specification.

Referring to FIG. 20, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The processor 102 may be included in an NCR including a network-controlled repeater (NCR)-MT (mobile termination) and an NCR-Fwd (Forwarding). The processor 102 performs an initial access procedure with a network via the NCR-MT, reports, via the NCR-MT, an internal delay value of the NCR-Fwd to the network, receives, via the NCR-MT, side control information from the network and performs, via the NCR-Fwd, a forwarding operation based on the side control information. Here, downlink transmission timing and uplink reception timing for an access link of the NCR-Fwd are determined by considering the internal delay value.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

The processor 202 may be included in a base station. The processor 202 performs an initial access procedure with a network-controlled repeater (NCR)- mobile termination (MT) of a NCR which including the NCR-MT and NCR-forwarding (Fwd), receives, from the NCR-MT, an internal delay value of the NCR-Fwd, transmits, to the NCR-MT, side control information and receives a signal from the NCR-Fwd or transmits a signal to the NCR-Fwd based on the side control information. Here, the base station assumes that downlink transmission timing and uplink reception timing for an access link of the NCR-Fwd are determined by considering the internal delay value.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: performing, via the NCR-MT of an NCR including the NCR-MT (mobile termination) and an NCR-Fwd (Forwarding, an initial access procedure with a network, reporting, via the NCR-MT, an internal delay value of the NCR-Fwd to the network, receiving, via the NCR-MT, side control information from the network and performing, via the NCR-Fwd, a forwarding operation based on the side control information. Here, downlink transmission timing and uplink reception timing for an access link of the NCR-Fwd are determined by considering the internal delay value.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

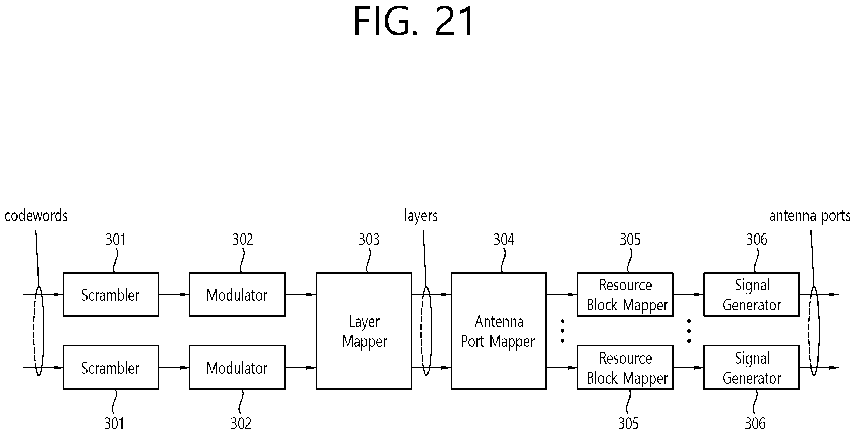

FIG. 21 shows an example of a structure of a signal processing module. Herein, signal processing may be performed in the processors 102 and 202 of FIG. 20.

Referring to FIG. 21, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

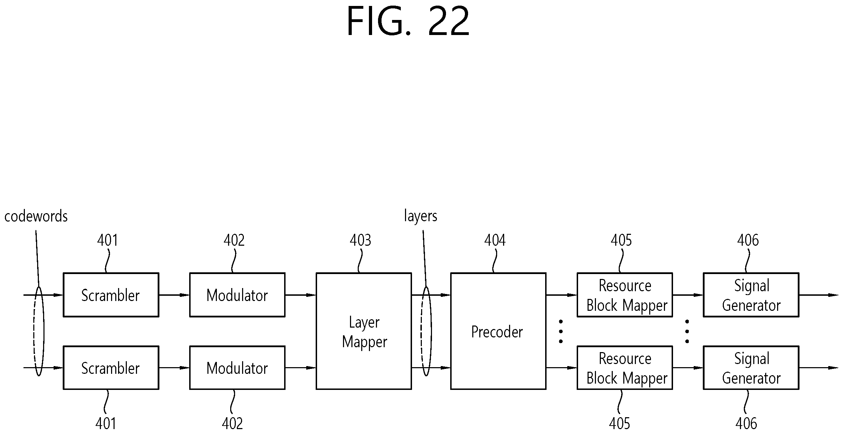

FIG. 22 shows another example of a structure of a signal processing module in a transmitting device. Herein, signal processing may be performed in a processor of a UE/BS, such as the processors 102 and 202 of FIG. 20.

Referring to FIG. 22, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N × M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

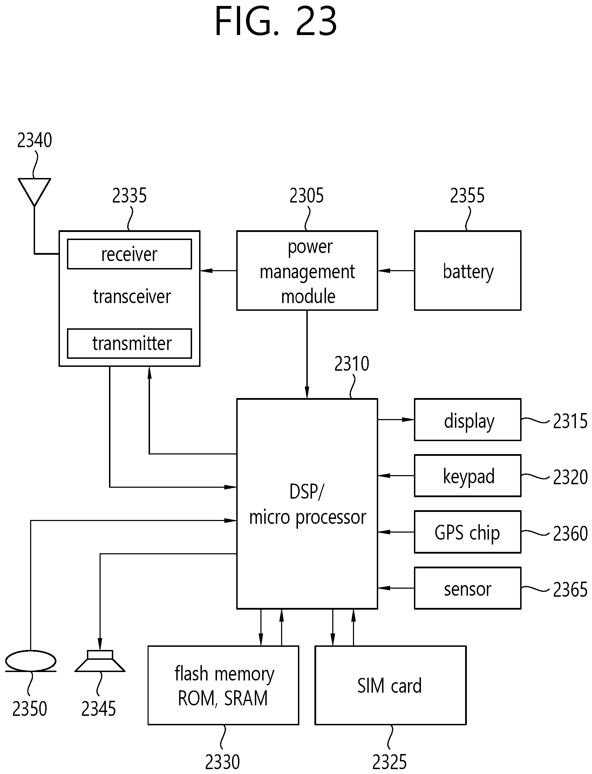

FIG. 23 illustrates an example of a wireless communication device according to an implementation example of the present disclosure.

Referring to FIG. 23, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 23 may be the processors 102 and 202 in FIG. 20.

The memory 2330 is connected to the processor 2310 and stores information related to operations of the processor. The memory may be located inside or outside the processor and connected to the processor through various techniques such as wired connection and wireless connection. The memory 2330 in FIG. 23 may be the memories 104 and 204 in FIG. 20.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 23, various components such as a camera and a universal serial bus (USB) port may be additionally included in the UE. For example, the camera may be connected to the processor 2310.

FIG. 23 is an example of implementation with respect to the UE and implementation examples of the present disclosure are not limited thereto. The UE need not essentially include all the components shown in FIG. 23. That is, some of the components, for example, the keypad 2320, the GPS chip 2360, the sensor 2365 and the SIM card 2325 may not be essential components. In this case, they may not be included in the UE.

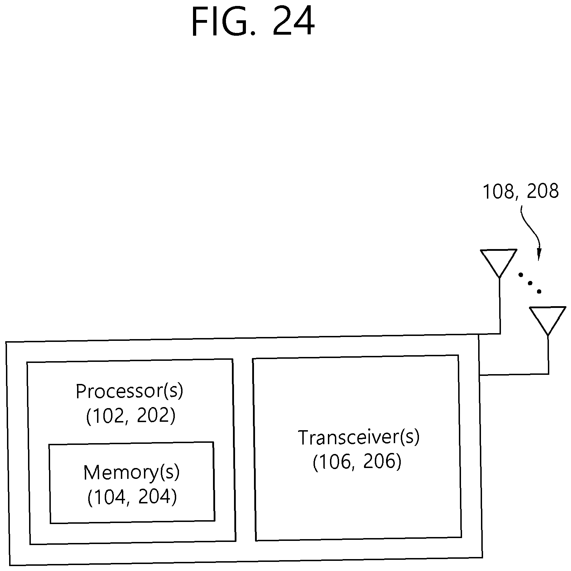

FIG. 24 shows another example of a wireless device.

Referring to FIG. 24, the wireless device may include one or more processors 102 and 202, one or more memories 104 and 204, one or more transceivers 106 and 206 and one or more antennas 108 and 208.

The example of the wireless device described in FIG. 24 is different from the example of the wireless described in FIG. 20 in that the processors 102 and 202 and the memories 104 and 204 are separated in FIG. 20 whereas the memories 104 and 204 are included in the processors 102 and 202 in the example of FIG. 24. That is, the processor and the memory may constitute one chip set.

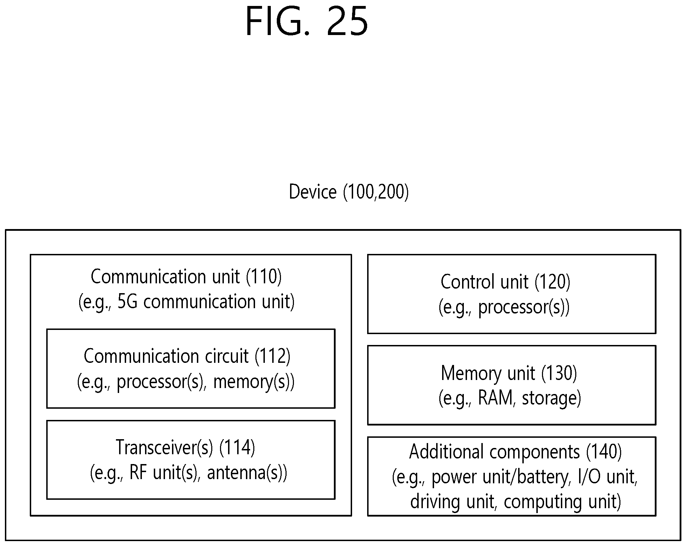

FIG. 25 shows another example of a wireless device applied to the present specification. The wireless device may be implemented in various forms according to a use-case/service.

Referring to FIG. 25, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

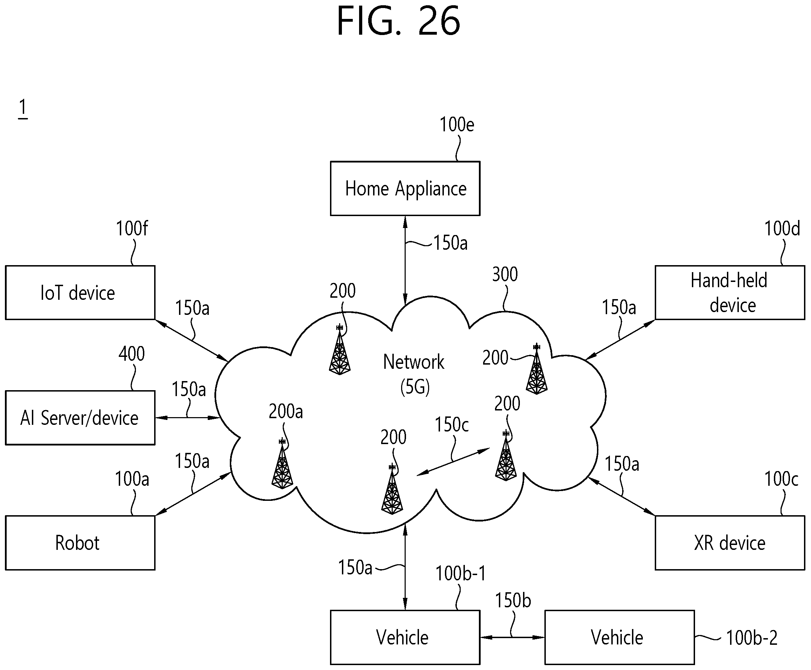

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 26, the vehicles 100b-1, 100b-2 of FIG. 26, the XR device 100c of FIG. 26, the hand-held device 100d of FIG. 26, the home appliance 100e of FIG. 26, the IoT device 100f of FIG. 26, a digital broadcast UE, a hologram device, a public safety device, an MTC device, a medicine device, a fintech device (or a finance device), a security device, a climate/environment device, the AI server/device 400 of FIG. 26, the BSs 200 of FIG. 26, a network node, etc. The wireless device may be used in a mobile or fixed place according to a use-example/service.

In FIG. 25, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

FIG. 26 illustrates a communication system 1 applied to the present specification.

Referring to FIG. 26, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smarmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2VyVehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 6. For convenience of explanation, among the frequency ranges that are used in an NR system, FR1 may mean a "sub 6GHz range", and FR2 may mean an "above 6GHz range" and may also be referred to as a millimeter wave (mmW).

**[Table 6]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 7 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 7]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a network-controlled repeater (NCR) including a NCR-mobile termination (MT) and a NCR-forwarding (Fwd) in a wireless communication system, the method comprising:
performing, via the NCR-MT, an initial access procedure with a network,
reporting, via the NCR-MT, an internal delay value of the NCR-Fwd to the network;
receiving, via the NCR-MT, side control information from the network; and
performing, via the NCR-Fwd, a forwarding operation based on the side control information,
wherein downlink transmission timing and uplink reception timing for an access link of the NCR-Fwd are determined by considering the internal delay value.

2. The method of claim 1, wherein the downlink transmission timing of the NCR-Fwd is delayed by the internal delay value compared to downlink reception timing of the NCR-MT, and
wherein the uplink reception timing of the NCR-Fwd is earlier than uplink transmission timing of the NCR-MT by the internal delay value.

3. The method of claim 1, wherein downlink reception timing of the NCR-Fwd is aligned with downlink reception timing of the NCR-MT, and uplink transmission timing of the NCR-Fwd is aligned with uplink transmission timing of the NCR-MT.

4. The method of claim 1, wherein the downlink transmission timing of the NCR-Fwd is timing at which the NCR-Fwd transmits a signal received from the network to a user equipment (UE).

5. The method of claim 1, wherein the uplink reception timing of the NCR-Fwd is timing at which the NCR-Fwd receives a signal from a user equipment (UE).

6. The method of claim 1, wherein downlink reception timing of the NCR-MT is timing at which the NCR-MT receives a signal from the network.

7. The method of claim 1, wherein uplink transmission timing of the NCR-MT is timing at which the NCR-MT transmits a signal to the network.

8. The method of claim 1, wherein downlink reception timing of the NCR-Fwd is timing at which the NCR-Fwd receives a signal from the network, and uplink transmission timing of the NCR-Fwd is timing at which the NCR-Fwd transmits a signal received from a user equipment (UE) to the network.

9. A network-controlled repeater (NCR) including a NCR-mobile termination (MT) and a NCR-forwarding (Fwd), the NCR comprising:
at least one transceiver;
at least one memory; and
at least one processor operably coupled to the at least one memory and the at least one transceiver, wherein the at least one processor is adapted to:
perform, via the NCR-MT, an initial access procedure with a network,
report, via the NCR-MT, an internal delay value of the NCR-Fwd to the network;
receive, via the NCR-MT, side control information from the network; and
perform, via the NCR-Fwd, a forwarding operation based on the side control information,
wherein downlink transmission timing and uplink reception timing for an access link of the NCR-Fwd are determined by considering the internal delay value.

10. The NCR of claim 9, wherein the downlink transmission timing of the NCR-Fwd is delayed by the internal delay value compared to downlink reception timing of the NCR-MT, and
wherein the uplink reception timing of the NCR-Fwd is earlier than uplink transmission timing of the NCR-MT by the internal delay value.

11. The NCR of claim 9, wherein downlink reception timing of the NCR-Fwd is aligned with downlink reception timing of the NCR-MT, and uplink transmission timing of the NCR-Fwd is aligned with uplink transmission timing of the NCR-MT.

12. The NCR of claim 9, wherein the downlink transmission timing of the NCR-Fwd is timing at which the NCR-Fwd transmits a signal received from the network to a user equipment (UE).

13. The NCR of claim 9, wherein the uplink reception timing of the NCR-Fwd is timing at which the NCR-Fwd receives a signal from a user equipment (UE).

14. The NCR of claim 9, wherein downlink reception timing of the NCR-MT is timing at which the NCR-MT receives a signal from the network.

15. The NCR of claim 9, wherein uplink transmission timing of the NCR-MT is timing at which the NCR-MT transmits a signal to the network.

16. The NCR of claim 9, wherein downlink reception timing of the NCR-Fwd is timing at which the NCR-Fwd receives a signal from the network, and uplink transmission timing of the NCR-Fwd is timing at which the NCR-Fwd transmits a signal received from a user equipment (UE) to the network.

17. An apparatus of a network-controlled repeater (NCR) including a NCR-mobile termination (MT) and a NCR-forwarding (Fwd), the apparatus comprising:
at least one memory; and
at least one processor operably coupled to the at least one memory,
wherein the at least one processor is adapted to:
perform, via the NCR-MT, an initial access procedure with a network,
report, via the NCR-MT, an internal delay value of the NCR-Fwd to the network;
receive, via the NCR-MT, side control information from the network; and
perform, via the NCR-Fwd, a forwarding operation based on the side control information,
wherein downlink transmission timing and uplink reception timing for an access link of the NCR-Fwd are determined by considering the internal delay value.

18. At least one computer readable medium (CRM) having instructions to be executed by at least one processor to perform operations includes:
performing, via the NCR-MT, an initial access procedure with a network,
reporting, via the NCR-MT, an internal delay value of the NCR-Fwd to the network;
receiving, via the NCR-MT, side control information from the network; and
performing, via the NCR-Fwd, a forwarding operation based on the side control information,
wherein downlink transmission timing and uplink reception timing for an access link of the NCR-Fwd are determined by considering the internal delay value.

19. A method of operating a base station in a wireless communication system, the method comprising:
performing an initial access procedure with a network-controlled repeater-termination (NCR-MT) of a NCR which includes the NCR-MT and a NCR-forwarding (Fwd);
receiving, from the NCR-MT, an internal delay value of the NCR-Fwd;
transmitting, to the NCR-MT, side control information; and
receiving a signal from the NCR-Fwd or transmitting a signal to the NCR-Fwd based on the side control information,
wherein the base station assumes that downlink transmission timing and uplink reception timing for an access link of the NCR-Fwd are determined by considering the internal delay value.

20. A base station (BS), the BS comprising:
at least one transceiver;
at least one memory; and
at least one processor operably coupled to the at least one memory and the transceiver, wherein the at least one processor is adapted to:
receive, from the NCR-MT, an internal delay value of the NCR-Fwd;
transmit, to the NCR-MT, side control information; and
receive a signal from the NCR-Fwd or transmitting a signal to the NCR-Fwd based on the side control information,
wherein the at least one processor assumes that downlink transmission timing and uplink reception timing for an access link of the NCR-Fwd are determined by considering the internal delay value.
